# EUROPÄISCHE PATENTSCHRIFT

(11) **EP 2 154 933 B1**
(45) Veröffentlichungstag und Bekanntmachung des Hinweises auf die Patenterteilung: **22.06.2011**
(21) Anmeldenummer: 08162408.2
(22) Anmeldetag: 14.08.2008
(51) Int. Cl.: H05B 33/08

(54) **LED-Leseleuchte und Verfahren zum Betreiben einer LED-Leseleuchte**
LED reading light and method for operating an LED reading light
Lampe de lecture DEL et procédé de fonctionnement d'une lampe de lecture DEL

(43) Veröffentlichungstag der Anmeldung: 17.02.2010
(73) Patentinhaber: Goodrich Lighting Systems GmbH, 59557 Lippstadt (DE)
(72) Erfinder: Röbke, Steffen, 33098 Paderborn (DE)
(74) Vertreter: von Kreisler Selting Werner

(56) Entgegenhaltungen:
- EP-A- 1 244 334
- EP-A- 1 379 108
- EP-A- 1 411 750
- EP-A- 1 517 588

## Beschreibung

Die Erfindung betrifft eine LED-Leseleuchte, insbesondere für ein Personentransportfahrzeug wie beispielsweise ein Flugzeug, ein Reisebus oder ein Schiff. Ferner betrifft die Erfindung ein Verfahren zum Betreiben einer LED-Leseleuchte für insbesondere ein Flugzeug, einen Reisebus oder dergleichen Personentransportfahrzeug.

In Personentransportfahrzeugen wie beispielsweise Flugzeugen, Reisebussen, Schiffen oder spurgeführten Fahrzeugen (z. B. Eisenbahnwaggons) werden Sitzplatz- oder Leseleuchten eingesetzt, die in zunehmendem Maße mit LED-Leuchtmitteln versehen werden. Damit die Ausleuchtung gleichmäßig erfolgt, ist man bestrebt, LED-Leuchtmittel zu verwenden, die Licht mit im wesentlichen gleicher Intensität abgeben. Dabei besteht die Problematik unter anderem darin, dass sich LED-Leuchtmittel nur mit einer nicht unerheblichen herstellungsbedingten Toleranz produzieren lassen. Bei bestimmten Applikationen eines LED-Leuchtmittels, z. B. beim Einsatz in einer Leseleuchte für ein Flugzeug, wird daher das LED-Leuchtmittel kodiert, was beispielsweise durch einen Kodierwiderstand erfolgt, der von einer die LED-Leseleuchte ansteuernden Versorgungseinheit ausgelesen wird und angibt, mit welchem Strom das LED-Leuchtmittel betrieben werden muss, um Licht mit der gewünschten Lichtintensität abzugeben. Eine LED-Leuchteinheit mit einer Spannungsversorgungs-einheit mit dem zuvor genannten Merkmalen ist aus EP-A-1411750 bekannt.

Für die Anwendung im Flugzeug als LED-Leseleuchten werden die LED-Leuchtmittel gegenwärtig in eine von einigen wenigen Klassen (aktuell existieren vier Klassen) von LED-Leuchtmitteln eingeteilt und durch die Kodierwiderstände entsprechend kodiert. Die Versorgungseinheit speist beim Einschalten einen kleinen Teststrom in die LED-Leseleuchte ein, um den Spannungsabfall über dem Kodierwiderstand zu messen. Der Teststrom ist dabei so gering gewählt, dass der Spannungsabfall über dem Kodierwiderstand in jedem Fall unter der Vorwärtsspannung des LED-Leuchtmittels bleibt, so dass dieses (noch) kein Licht abgibt. Entsprechend dem Wert des Spannungsabfalls wird dann anschließend einer von mehreren (gegenwärtig vier) möglichen Konstantströmen zur Versorgung der LED-Leseleuchte eingestellt.

Infolge der Modernisierung der LED-Herstellungstechniken und der Verwendung von verschiedensten Halbleitermaterialien mit unterschiedlichsten Dotierungen lassen sich in zunehmendem Maße LED-Leuchtmittel herstellen, die sich leider nicht mehr den gegenwärtig in der Luftfahrtindustrie verwendeten Klassen an LED-Leuchtmitteln zuordnen lassen. So ist man bei der Herstellung moderner LEDs bestrebt, deren Verlustleistung weiter zu reduzieren. Damit verringern sich immer weiter die Vorwärtsspannungen der LEDs, was einerseits bedeutet, dass die Versorgungsströme zur Erzielung der gewünschten Lichtintensität geringer werden, und zum anderen aber auch heißt, dass der durch den Teststrom verursachte Spannungsabfall am Kodierwiderstand nicht mehr notwendigerweise unterhalb der Vorwärtsspannung liegt. Beides macht es in zunehmendem Maße schwieriger, die gegenwärtigen in der zivilen Luftfahrtindustrie geltenden Spezifikationsanforderungen an LED-Leuchtmitteln für LED-Leseleuchten zu erfüllen. Das Problem könnte beispielsweise dadurch gelöst werden, dass die Versorgungseinheiten den modernen LED-Leuchtmitteln angepasst werden. Dies aber ist auch nicht ohne Probleme möglich, da die Umstellung der Versorgungseinheiten einen großen technischen Aufwand bedeutet, den die Hersteller von insbesondere zivilen Flugzeugen nicht auf sich nehmen wollen. Außerdem verlangen die Fluggesellschaften, dass defekte LED-Leuchtmittel von Leseleuchten gegen neue LED-Leuchtmittel ausgetauscht werden können, ohne dass für den Betrieb dieser neuen LED-Leuchtmittel auch neue Versorgungseinheiten erforderlich sind.

Aufgabe der Erfindung ist es, eine LED-Leseleuchte insbesondere für ein Personentransportfahrzeug zu schaffen, die trotz Einsatz moderner LED-Leuchtmittel mittels der insbesondere in zivilen Flugzeugen eingesetzten Versorgungseinheiten zur Abgabe von Licht mit der gewünschten Lichtintensität betrieben werden können.

Zur Lösung dieser Aufgabe wird mit der Erfindung eine LED-Leseleuchte, insbesondere für ein Personentransportfahrzeug wie beispielsweise Flugzeug, Reisebus oder Schiff, vorgeschlagen, wobei die LED-Leseleuchte versehen ist mit den Merkmalen des Anspruchs 1.

Erfindungsgemäß wird also mit der Erfindung vorgeschlagen, für den Betrieb des LED-Leuchtmittels einer LED-Leseleuchte nicht mehr primär die in dem Personentransportfahrzeug vorhandene Versorgungseinheit sondern eine in die LED-Leseleuchte integrierte Einheit, nämlich einen separaten Stromregler zu nutzen. Dabei weist die LED-Leseleuchte jedoch weiterhin einen Kodierwiderstand bzw. allgemein ein elektrisches Kodierbauelement auf, das von der im Personentransportfahrzeug installierten Versorgungseinheit auf herkömmliche Weise ausgelesen wird. Die Besonderheit besteht nun darin, dass dieses Kodierbauelement denjenigen elektrischen Parameter bzw. diejenige elektrische Kenngröße (z.B. Widerstandswert) aufweist, also derart kodiert ist, dass die Versorgungseinheit den maximalen Versorgungsstrom zur Verfügung stellt. Mit Hilfe des zusätzlichen Stromreglers wird dieser maximale Versorgungsstrom auf diejenige Größe (herunter-)geregelt, die zum Betrieb des LED-Leuchtmittels erforderlich ist, damit das LED-Leuchtmittel Licht mit der gewünschten Lichtintensität abgibt. Die Größe des für das jeweilige LED-Leuchtmittel erforderlichen Betriebsstroms ist in der LED-Leseleuchte kodiert abgelegt, was entweder durch ein elektrisches Bauelement (wie beispielsweise einen Widerstand) oder programmierbar durch einen Mikroprozessor realisiert ist.

Bei der Initialisierung oder beim Einschalten der LED-Leseleuchte wird also wie bisher von der Versorgungseinheit das Kodierbauelement, d. h. beispielsweise der Kodierwiderstand, ausgelesen. Die Versorgungseinheit erkennt nun, dass der Kodierwiderstand maximalen Versorgungsstrom signalisiert. Mit dieser somit zur Verfügung gestellten Versorgungsenergie wird nun der Stromregler betrieben, der den Konstantstrom für das LED-Leuchtmittel auf einen an das Leuchtmittel angepassten Wert regelt.

Mit der derart ausgebildeten Beschaltung der LED-Leseleuchte lässt sich diese durch die im Personentransportfahrzeug installierte Versorgungseinheit wie eine herkömmliche LED-Leseleuchte betreiben, Beispielsweise kann die erfindungsgemäße LED-Leseleuchte durch die Versorgungseinheit auf- und abgedimmt werden, wie es gegenwärtig beim Ein- und Ausschalten von LED-Leseleuchten in Flugzeugen der Fall ist.

Mit der Erfindung wird zur Lösung der oben angegebenen Aufgabe ebenfalls ein Verfahren zum Betreiben einer LED-Leseleuchte insbesondere für ein Personentransportfahrzeug wie ein Flugzeug, einen Reisebus oder ein Schiff vorgeschlagen, wobei das Verfahren gemäß Anspruch 5 definiert ist.

Die Erfindung wird nachfolgend anhand zweier Ausführungsbeispiele und unter Bezugnahme auf die Zeichnung näher erläutert. Im Einzelnen zeigen dabei:
- Fig. 1: ein Blockschaltbild einer ersten Variante einer LED-Leseleuchte mit durch einen Messwiderstand bestimmter Größe des Konstantstroms,
- Fig. 2: ein Blockschaltbild eines zweiten Ausführungsbeispiels der LED- Leseleuchte, bei der der den Konstantstrom liefernde Stromregler mit Hilfe eines Mikrocontrollers ansteuerbar und damit programmierbar ist und
- Fig. 3: ein Blockschaltbild der herkömmlichen Beschaltung einer LED- Leseleuchte für ein Flugzeug.

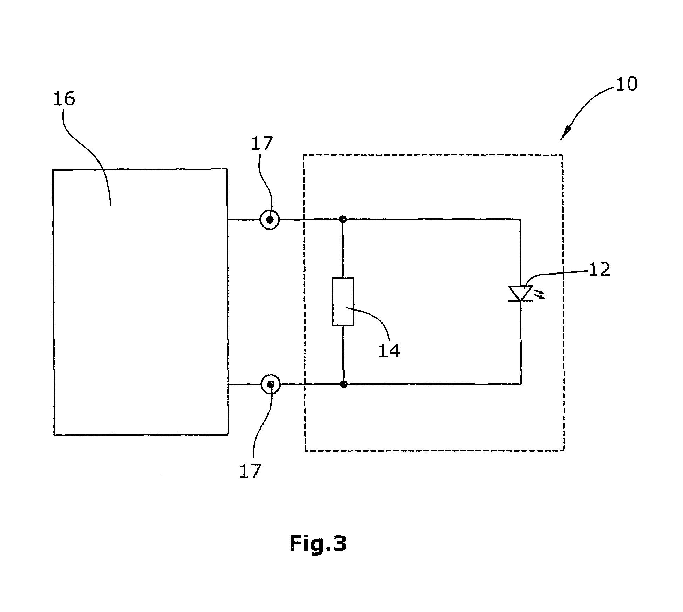

In Fig. 3 ist schematisch die gegenwärtig beispielsweise bei Flugzeugen anzutreffende Beschaltung einer LED-Sitzplatz/Leseleuchte dargestellt, die LED-Leseleuchte 10 weist ein LED-Leuchtmittel 12 auf, das in einem Gehäuse mit Kühlkörper und Lichtscheibe angeordnet Ist. Parallel zum LED-Leuchtmittel 12 ist ein Kodierwiderstand 14 geschaltet, der ebenfalls Bestandteil der LED-Leseleuchte 10 ist. In der schematischen Darstellung gemäß Fig. 3 sind das Gehäuse, der Kühlkörper, die Lichtscheibe und andere zur LED-Leseleuchte gehörende Komponenten nicht dargestellt, da diese Komponenten für die Erfindung nicht wesentlich sind.

Die Energieversorgung und insbesondere Konstantstromversorgung des LED-Leuchtmittels 12 erfolgt durch eine Versorgungseinheit 16, mit der die Versorgungsenergieanschlüsse 17 einer oder mehrerer Leseleuchten 10 des Flugzeuges verbunden sind und an die darüber hinaus auch noch die anderen in einer sogenannten PSU (Passenger Service Unit) angeordneten Komponenten angeschlossen sind. Die Versorgungseinheit 6 wird mitunter auch "Passenger Interface & Supply Adapter" genannt.

Die Versorgungseinheit 16 versorgt das LED-Leuchtmittel 12 mit Strom, wenn die LED-Leseleuchte eingeschaltet wird. Dabei wird die LED-Leseleuchte beim Einschalten aufgedimmt und beim Abschalten abgedimmt, wobei es sich bei diesen Merkmalen um für die Erfindung nicht relevante Merkmale handelt.

Die Größe des Kodierwiderstandes 14, der vor der Konstantstromversorgung des LED-Leuchtmittels 12 von der Versorgungseinheit 16 abgefragt wird, bestimmt die Größe des Konstantstromes, so dass das LED-Leuchtmittel 12 Licht mit der gewünschten Intensität abgibt, und zwar auch dann, wenn die Lichtausbeute der zum Einsatz kommenden LED-Leuchtmittel unterschiedlich ist.

Die grundsätzliche Problematik bei LED-Leuchten besteht darin, dass die LED-Leuchtmittel ständig weiterentwickelt werden, wobei bereits schon jetzt und auch in Zukunft wohl nur noch Typen von LED-Leuchtmitteln verfügbar sein werden, die bei gleichem Strom mehr Licht abgeben. Ferner existiert bei den LED-Leuchtmitteln eine breite Streuung bezüglich der Lichtausbeute. Da aber bei den in heutigen zivilen Flugzeugen installierten Versorgungseinheiten ein Konstantstrom mit einer von lediglich einigen wenigen (gegenwärtig vier) möglichen Größen ausgewählt werden kann, ist angesichts der technisch möglichen Lichtausbeute bei den modernen LED-Leuchtmitteln eine Anpassung des Stromes an die Vielfalt der bei modernen LED-Leuchtmitteln gegebenen Lichtausbeuten nicht mehr möglich. Der Flugzeug-Hersteller jedoch verlangt, dass die Leseleuchten stets mit gleicher Helligkeit/Intensität arbeiten bzw. geliefert werden, was insbesondere beim Austausch einer defekten Leseleuchte gegen eine neue gewährleistet sein muss.

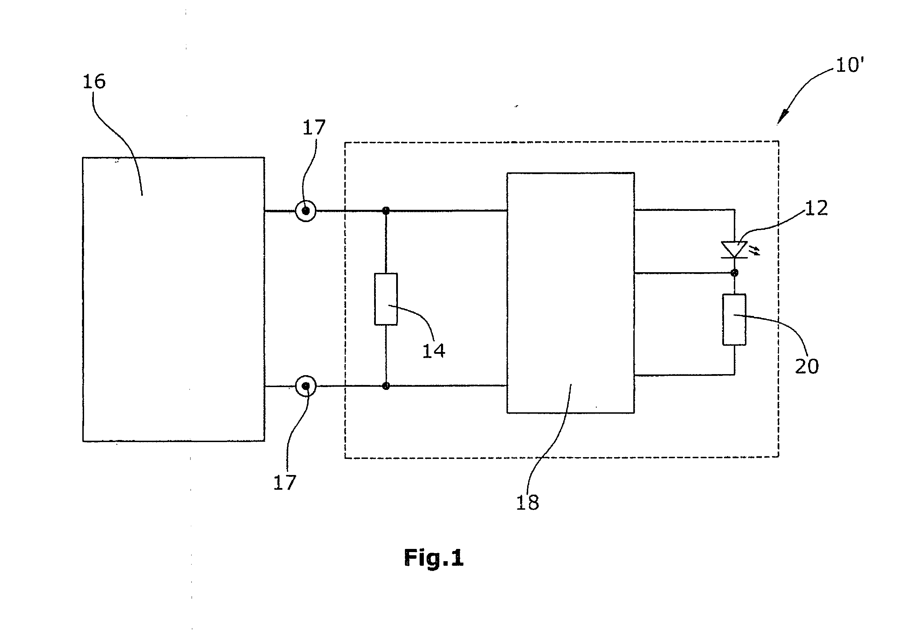

Um dieses Problem zu lösen, wird gemäß einem ersten Ausführungsbeispiel der Erfindung eine LED-Leseleuchte 10' mit einer Beschaltung gemäß Fig. 1 vorgeschlagen. In Fig. 1 sind diejenigen Elemente, die gleich bzw, funktionsgleich zu den Elementen sind, wie sie in Fig. 3 gezeigt sind, mit den gleichen Bezugszeichen versehen.

Die LED-Leseleuchte 10' gemäß dem ersten Ausführungsbeispiel der Erfindung nach Fig. 1 weist neben dem LED-Leuchtmittel 12 wiederum einen Kodierwiderstand 14 auf, der für sämtliche LED-Leseleuchten gleich gewählt ist und einen Wert aufweist, bei dem die Versorgungseinheit 16 den maximalen Versorgungsstrom (Konstantstrom) liefert. Zwischen dem Kodierwiderstand 14 und dem LED-Leuchtmittel 12 ist nun ein Stromregler 18 geschaltet, der den Betriebsstrom für das LED-Leuchtmittel 12 so wählt, wie es durch einen Strom-Messwiderstand 20 vorgegeben ist, der in Reihe zum LED-Leuchtmittel 12 geschaltet ist. Der Wert des Strom-Messwiderstandes 20 kann nun an das LED-Leuchtmittel 12 und dessen elektrooptischen Parametern angepasst werden. Für die Anpassung an die bei einem LED-Leuchtmittel 12 gegebene Lichtausbeute kann nun zwischen einer wesentlich größeren Anzahl an unterschiedlichen Widerständen ausgewählt werden, als dies bei dem Kodierwiderstand 14 der Fall ist. Für die Versorgungseinheit 16 stellt sich die LED-Leseleuchte 10' wie eine normale LED-Leseleuchte 10' mit einem Kodierwiderstand dar, der für maximale Stromversorgung kodiert ist. Damit kann die Versorgungseinheit 16 trotz des Anschlusses einer LED-Leseleuchte 10' mit modernem LED-Leuchtmittel 12 genauso arbeiten wie bei einem LED-Leuchtmittel 12, das entsprechend der früheren Klassifizierung aus einer (nämlich für sämtliche LED-Leuchtmittel gleichen Gruppe) der vier Gruppen ausgewählt wurde. Die Versorgungseinheit 16 liest also weiterhin bei ihrer Initialisierung bzw. spätestens beim Einschalten der LED-Leseleuchte 10' den Kodierwiderstand 14 aus, wobei auch das Auf- und Abdimmen des LED-Leuchtmittels 12 beim Ein- bzw. Ausschalten der LED-Leseleuchte 10 unverän-dert beibehalten werden kann.

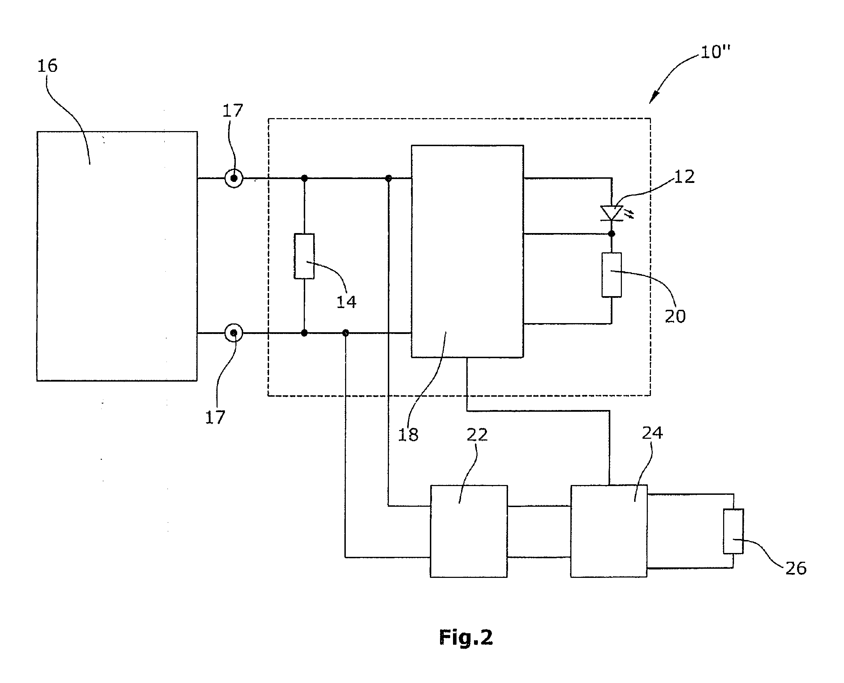

Eine zweite Variante einer LED-Leseleuchte 10" mit erfindungsgemäßer Beschaltung ist in Fig. 2 gezeigt. Auch hier gilt, dass diejenigen Elemente in Fig. 2, die den Elementen der Leseleuchtenbeschaltung gemäß Fig. 1 entsprechen bzw. gleichen, mit den gleichen Bezugszeichen wie in Fig. 1 versehen sind. So weist also die LED-Leseleuchte 10" gemäß Fig. 2 wiederum einen Kodierwiderstand 14 auf, dessen Wert derart gewählt ist, dass er der Versorgungseinheit 16 die Bereitstellung des maximalen Versorgungsstroms signalisiert. In Reihe zum LED-Leuchtmittel 12 liegt wiederum ein Strom-Messwiderstand 20, wobei diese Reihenschaltung von einem Stromregler mit einem Konstantstrom versorgt wird, dessen Größe durch die Größe des Strom-Messwiderstandes 20 bestimmt ist. Der Stromregler 18 befindet sich wie im Ausführungsbeispiel gemäß Fig. 1 zwischen dem Kodierwiderstand 14 und der Reihenschaltung aus LED-Leuchtmittel 12 und Strom-Messwiderstand 20.

An den Eingangsanschlüssen 17 der LED-Leseleuchte 10" ist ferner ein Spannungsregler 22 angeschlossen, der einen Mikrocontroller 24 mit einer Betriebsspannung versorgt. Der Mikrocontroller 24 steuert nun über ein beispielsweise PWM-Signal den Stromregler 18 an. Das PWM-Tastverhältnis kann durch den Mikrocontroller 24 individuell entsprechend den elektrooptischen Parametern des LED-Leuchtmittels 12 angepasst werden, womit deren Helligkeit einstellbar ist. Da der Mikrocontroller 24 beispielsweise analoge Eingänge besitzt, kann in der Fertigung während der Lichtmessung über einen Trimmwiderstand 26 oder über eine variable Spannung das gewünschte PWM-Tastverhältnis individuell eingestellt werden, so dass die geforderten Lichtwerte des für die LED-Leseleuchte 10" verwendeten Leuchtmittels erreicht werden. Nach dem Entfernen des Trimmwiderstandes 26 speichert der Mikrocontroller 24 das PWM-Tastverhältnis dauerhaft in einem internen Speicher. Bei dieser Lösung braucht dann der Strom-Messwiderstand 20 in Abhängigkeit von dem eingesetztem LED-Leuchtmittel 12 nicht verändert zu werden; vielmehr kann für sämtliche LED-Leuchtmittel 12 eines Typs jeweils der gleiche Strom-Messwiderstand 20 verwendet werden. Schließlich ist es auch möglich, bereits gefertigte LED-Leseleuchten im Nachhinein für eine andere Helligkeitsklasse nach Bedarf "umzuprogrammieren".

Es sei an dieser Stelle im Hinblick auf das Ausführungsbeispiel gemäß Fig. 2 gesagt, dass die Programmierung des Mikrocontrollers 24 mit Hilfe des Trimmwiderstandes 26 nur eine von mehreren Möglichkeiten ist. Entscheidend bei der Variante gemäß Fig. 2 ist, dass vor bzw. nach der Fertigung der LED-Leseleuchte deren Helligkeit durch Programmierung oder dergleichen eingestellt und damit an konkrete Anforderungen angepasst werden kann.

## Patentansprüche

1. LED-Leseleuchte, insbesondere für ein Personentransportfahrzeug wie z. B. Flugzeug, Reisebus oder Schiff mit
- wei Versorgungsenergieanschlüssen (17) zur Verbindung mit einer Versorgungseinheit (16),
- einem LED-Leuchtmittel (12) zur Abgabe von Licht mit einer gewünschten Lichtintensität und
- einem Kodierbauelement (14), insbesondere Kodierwiderstand, mit einem elektrischen Parameter, der die Größe eines von der Versorgungseinheit (16) bereitstellbaren Versorgungsstroms für das LED-Leuchtmittel bestimmt,
**gekennzeichnet durch**
- einen Stromregler (18), der einen Betriebsstrom zum Betreiben des LED-Leuchtmittels (12) bereitstellt,
- wobei das Kodierbauelement (14) den elektrischen Parameter für die Bereitstellung des maximal möglichen, von der Versorgungseinheit (16) bereitstellbaren Versorgungsstroms aufweist,
- wobei der Stromregler (18) bei Bereitstellung des maximal möglichen Versorgungsstroms **durch** die Versorgungseinheit (16) den Betriebsstrom auf einen Wert regelt, bei dem das LED-Leuchtmittel (12) Licht mit der gewünschten Lichtintensität abgibt.

2. LED-Leseleuchte nach Anspruch 1, **gekennzeichnet durch** einen Messwiderstand (20), der mit dem Stromregler (18) verbunden ist und dessen Wert diejenige Größe des Betriebsstroms für das LED-Leuchtmittel (12) bestimmt, auf die der Stromregler (18) den Betriebsstrom zur Abgabe von Licht mit der gewünschten Lichtintensität **durch** das LED-Leuchtmittel (12) regelt.

3. LED-Leseleuchte nach Anspruch 1, **gekennzeichnet durch** einen mit den Versorgungsenergieanschlüssen (17) verbundenen Spannungsregler (22) zur Erzeugung einer Versorgungsspannung für eine Steuereinheit (24) zur Ansteuerung des Stromreglers (18) zur Erzeugung und Regelung des Betriebsstroms mit bzw. auf diejenige Größe, die zur Abgabe von Licht mit der gewünschten Lichtintensität **durch** das LED-Leuchtmittel (12) erforderlich ist.

4. LED-Leseleuchte nach einem der Ansprüche 1 bis 3, **dadurch gekennzeichnet, dass** das Kodierbauelement (14) mit den Versorgungsanschlüssen (17) verbunden ist und dass der Stromregler (18) zwischen dem Kodierbauelement (14) und dem LED-Leuchtmittel (12) angeordnet ist.

5. Verfahren zum Betreiben einer LED-Leseleuchte, insbesondere einer LED-Leseleuchte für ein Flugzeug, einen Reisebus, ein Schiff oder dergleichen Personentransportfahrzeug, wobei die LED-Leseleuchte mit einem Leuchtmittel (12) aus einer von mehreren Klassen von LED-Leuchtmitteln (12) bestückbar ist, die sich bezüglich ihrer zur Erzielung einer gewünschten Lichtintensität erforderlichen Bestromung unterscheiden, und wobei die für das jeweils eingesetzte LED-Leuchtmittel (12) erforderliche Bestromung durch ein zum LED-Leuchtmittel (12) parallel geschaltetes elektrisches Kodierbauelement (14), insbesondere einen Kodierwiderstand, bestimmt ist, wobei bei dem Verfahren
- von einer übergeordneten Versorgungseinheit (16) ein Versorgungsstrom für ein LED-Leuchtmittel (12) erzeugt wird und
- mit der Versorgungseinheit (16) ein LED-Leuchtmittel (12) mit maximal mögliche Bestromung repräsentierendem Kodierbauelement (14) verbunden wird,
**dadurch gekennzeichnet, dass**
- von der Versorgungseinheit (16) ein Betriebsstrom für maximal mögliche Bestromung erzeugt wird und
- mit der Versorgungseinheit (16) ein Stromregler (18) zur Versorgung des LED-Leuchtmittels (12) mit einem Betriebsstrom verbunden wird,
- wobei der Stromregler (18) für das LED-Leuchtmittel (12) mit dem die LED-Leseleuchte (10',10") bestückt ist, den Betriebsstrom auf eine Größe regelt, bei der das LED-Leuchtmittel (12) Licht mit der gewünschten Lichtintensität abgibt.

## Claims

1. LED reading light, in particular for a passenger transportation vehicle such as, for example, an airplane, a bus, or a ship, with
- two power supply connections (17) for connection to a power supply unit (16),
- an LED light means (12) for giving off light with a desired light intensity, and
- a coding component (14), in particular a coding resistor, with an electric parameter which specifies the magnitude of a power supply current for the LED light means which can be provided by the power supply unit (16),
**characterized by**
- a current controller (18) which provides an operating current for the operation of the LED light means (12),
- where the coding component (14) exhibits the electrical parameter for the provision of the maximum possible power supply current which can be provided by the power supply unit (16),
- where, when the maximum possible power supply current is provided by the power supply unit (16), the current controller (18) adjusts the operating current to a value at which the LED light means (12) gives off light with the desired light intensity.

2. LED reading light according to claim 1, **characterized by** a measuring resistor (20) which is connected to the current controller (18) and whose value specifies the magnitude of the operating current for the LED light means (12) to which the current controller (18) adjusts the operating current to give off light with the light intensity desired by the LED light means (12).

3. LED reading light according to claim 1, **characterized by** a voltage controller (22) connected to the power supply connections (17) for the generation of a supply voltage for a control unit (24) for the actuation of the current controller (18) for the generation and adjustment of the operating current with or to that magnitude which is required to give off light with the light intensity desired by the LED light means (12).

4. LED reading light according to one of claims 1 to 3, **characterized in that** the coding component (14) is connected to the power supply connections (17) and the current controller (18) is disposed between the coding component (14) and the LED light means (12).

5. A method of operating an LED reading light, in particular an LED reading light for an airplane, a bus, a ship, or similar passenger transportation vehicle, wherein the LED reading light is adapted to be equipped with a light means (12) from one of several classes of LED light means (12) which are distinguished with regard to their feed current required for obtaining the desired light intensity, and where the feed current required for the LED light means (12) used in each case is specified by an electrical coding component (14) connected in parallel to the LED light means (12), in particular a coding resistor, wherein in the method:
- a power supply current for an LED light means (12) is generated by a superordinate power supply unit (16),
- an LED light means (12) with a coding component (14) representing the maximum possible current feed is connected to the power supply unit (16),
**characterized in that**
- an operating current for the maximum possible current feed is generated by the power supply unit (16), and
- a current controller (18) for providing the LED light means (12) with an operating current is connected to the power supply unit (16),
- where the current controller (18) for the LED light means (12) with which the LED reading light (10',10") is equipped adjusts the operating current to a magnitude at which the LED light means (12) gives off light with the desired light intensity.

## Revendications

1. Lampe de lecture DEL, notamment pour un véhicule de transport de passagers comme, par exemple, un avion, un autocar de tourisme ou un navire, comprenant
- deux connexions d'alimentation en énergie (17) destinées au branchement sur une unité d'alimentation (16),
- une ampoule DEL (12) pour émettre de la lumière avec une intensité de lumière désirée, et
- un composant de codage (14), notamment une résistance de codage, avec un paramètre électrique définissant la magnitude du courant d'alimentation pour ladite ampoule DEL que ladite unité d'alimentation (16) est apte à fournir,
**caractérisée par**
- un régulateur de courant (18) fournissant un courant de fonctionnement pour le fonctionnement de ladite ampoule DEL (12),
- ledit composant de codage (14) présente ledit paramètre électrique pour l'alimentation en courant d'alimentation maximal que ladite unité d'alimentation (16) est apte à fournir,
- lors de la mise à disposition du courant d'alimentation maximal que ladite unité d'alimentation (16) est apte à fournir, ledit régulateur de courant (18) règle le courant de fonctionnement à une valeur où ladite ampoule DEL (12) émet de la lumière avec l'intensité de lumière désirée.

2. Lampe de lecture DEL selon la revendication 1, **caractérisée par** une résistance de mesure (20) connectée audit régulateur de courant (18) et dont la valeur définit la magnitude du courant de fonctionnement pour ladite ampoule DEL (12) à laquelle ledit régulateur de courant (18) règle ledit courant de fonctionnement pour l'émission de lumière avec l'intensité de lumière désirée par ladite ampoule DEL (12).

3. Lampe de lecture DEL selon la revendication 1, **caractérisée par** un régulateur de tension (22) connecté auxdites connexions d'alimentation en énergie (17) pour générer une tension d'alimentation pour une unité de commande (24) commandant ledit régulateur de courant (18) afin de générer et régler ledit courant de fonctionnement avec ou à la magnitude nécessaire pour l'émission de lumière avec l'intensité de lumière désirée par ladite ampoule DEL (12).

4. Lampe de lecture DEL selon l'une quelconque des revendications 1 à 3, **caractérisée en ce que** ledit composant de codage (14) est connecté auxdites connexions d'alimentation (17) et que ledit régulateur de courant (18) est disposé entre ledit composant de codage (14) et ladite ampoule DEL (12).

5. Procédé de fonctionnement d'une lampe de lecture DEL, notamment une lampe de lecture DEL pour un avion, un autocar de tourisme, un navire ou un véhicule de transport de passagers similaire, ladite lampe de lecture DEL étant apte à être munie d'une ampoule (12) d'une de plusieurs classes d'ampoules DEL (12) différent quant à l'alimentation en courant nécessaire à obtenir une intensité de lumière désirée, et ladite alimentation en courant nécessaire pour l'ampoule DEL (12) respective utilisée est définie par un composant de codage (14), notamment une résistance de codage, branché en parallèle à ladite ampoule DEL (12), dans lequel procédé
- une unité d'alimentation (16) supérieure génère un courant d'alimentation pour une ampoule DEL (12), et
- ladite unité d'alimentation (16) est connectée à une ampoule DEL (12) avec un composant de codage (14) représentant l'alimentation en courant d'alimentation maximal possible,
**caractérisé en ce que**
- ladite unité d'alimentation (16) génère un courant de fonctionnement pour l'alimentation en courant maximal possible, et
- un régulateur de courant (18) pour l'alimentation de ladite ampoule DEL (12) en courant de fonctionnement est connecté à ladite unité d'alimentation (16),
- ledit régulateur de courant (18) réglant le courant de fonctionnement pour ladite ampoule DEL (12), avec laquelle la lampe de lecture DEL (10', 10") est munie, à une magnitude à laquelle ladite ampoule DEL (12) émet de la lumière avec l'intensité de lumière désirée.
